# EUROPEAN PATENT APPLICATION

(11) **EP 0 717 308 A2**
(43) Date of publication of application: **19.06.1996**
(21) Application number: 95309130.3
(22) Date of filing: 14.12.1995
(51) Int. Cl.: G03B 17/42

(54) **Driving apparatus**

(30) Priority: 15.12.1994 JP 311969/94; 15.12.1994 JP 311972/94; 15.12.1994 JP 311973/94; 15.12.1994 JP 311974/94
(71) Applicant: NIKON CORPORATION, Tokyo (JP)
(72) Inventor: Soshi, Isao, Setagaya-ku, Tokyo (JP); Nishimura, Tomoki, Kawasaki-shi Kanagawa-ken (JP)
(74) Representative: Burke, Steven David

(57) **Abstract**

This invention provides a driving apparatus provided with a stopper (52) capable of restraining a planetary clutch (3) in a predetermined position without using a drive source. In a driving apparatus provided with a spool shaft driving unit (5) having a spool gear (50) disposed therein, a clutch unit having a sun gear (31) and a planetary gear (32), the planetary gear being biased in a direction to mesh with the spool gear when the sun gear is rotated in a first direction (R20), the planetary gear being biased in a direction to separate from the spool gear when the sun gear is rotated in a second direction (R10), and a stopper movable between a first position in which it blocks the movement of the planetary gear separating from the spool gear and a second position in which it permits the movement of the planetary gear separating from the spool gear, there are provided a spool gear and a spool driving plate (51) for converting motion in a spool shaft driving unit into the motion of the stopper between the first position and the second position.

## Description

### BACKGROUND OF THE INVENTION

### Field of the Invention

This invention relates to a driving apparatus provided with a planetary clutch and a stopper for restraining the planetary clutch in a predetermined position.

### Related Background Art

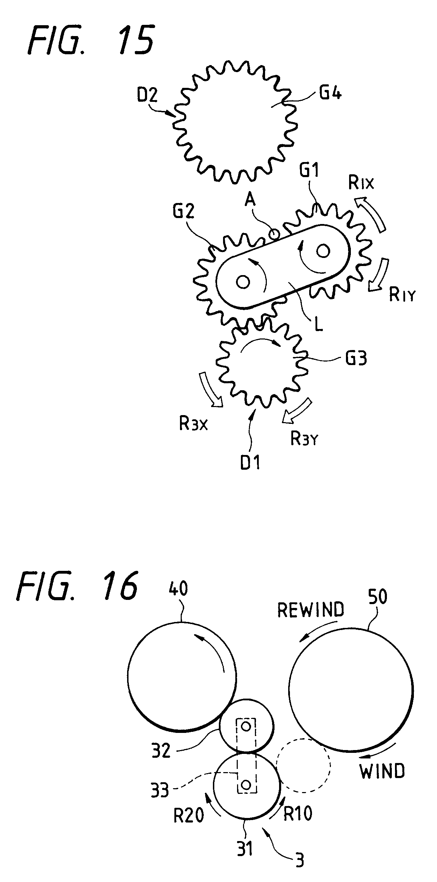

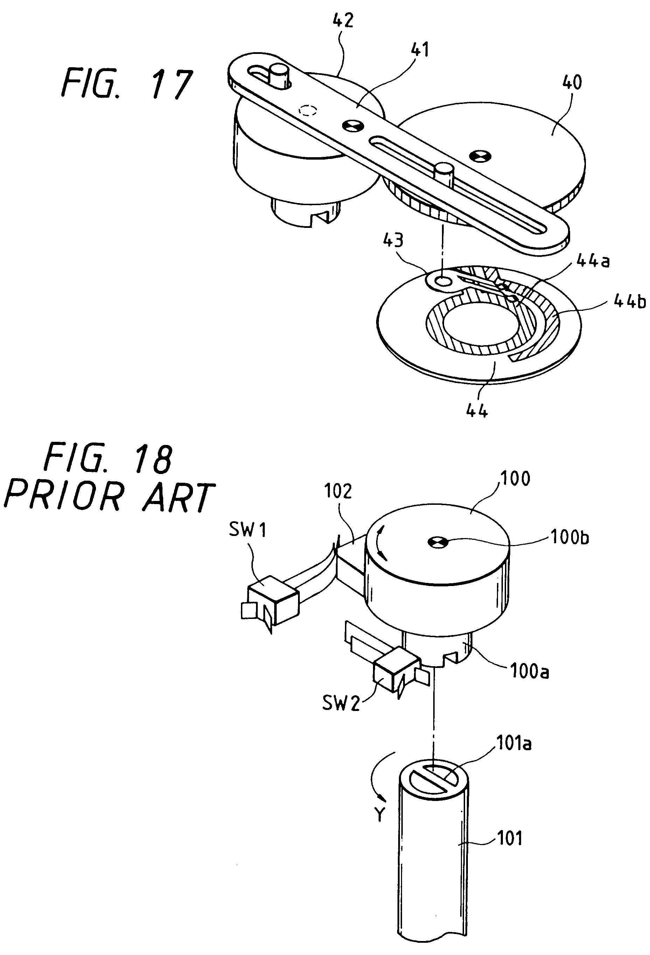

(i) A planetary clutch mechanism shown in Figure 15 of the accompanying drawings is known as a mechanism for selectively transmitting the rotation of a single drive source to two drive systems. This mechanism has a sun gear G1 rotatively driven by a drive source, not shown, a planetary gear G2 meshing therewith and a planetary lever L rotatably supporting the two gears G1 and G2. The sun gear G1 or the planetary gear G2 and the planetary lever L and biased by a resilient member (not shown) such as a spring, and by a frictional force resulting therefrom, the planetary lever L is biased in the same direction as the direction of rotation of the sun gear G1 and the planetary gear G2 selectively comes into meshing engagement with the input gear G3 of a first drive system D1 or the input gear G4 of a second drive system D2.
   The letter A designates a stopper movable in a direction perpendicular to the plane of the drawing sheet of Figure 15 by a drive source, not shown. In a first position in which the stopper A has been moved in the direction of the front surface of the drawing sheet, even if the sun gear G1 is rotated in the direction of arrow R1Y, the stopper A bears against the planetary lever L and prevents the planetary gear G2 from separating from the input gear G3 of the first drive system D1, and in a second position in which the stopper A has been moved in the direction of the back surface of the drawing sheet, the stopper A having so far born against the planetary lever L separates from the planetary lever L and permits the planetary gear G2 to separate from the input gear G3 when the sun gear G1 is rotated in the direction of arrow R1Y. When the sun gear G1 is rotated in the direction of arrow R1X and the planetary lever L is being biased so that the planetary gear G2 may come into meshing engagement with the input gear G3 of the first drive system D1, the input gear G3 is rotatively driven in the direction of arrow R3X. On the other hand, when the input gear G3 is rotatively driven in the direction of arrow R3Y by a drive source, the sun gear G1 rotates in the direction of arrow R1Y and therefore, the planetary lever L is biased so that the planetary gear G2 may separate from the input gear G3, but the stopper A is moved to the first position to thereby prevent the planetary gear G2 from separating from the input gear G3 and the input gear G3 is rotatively driven in the direction of arrow R3Y.
   In the prior-art driving apparatus described above, however, a drive source (a motor or an actuator) for moving the stopper A to the first position or the second position is necessary, and this has led to the disadvantage that the dimensions of the driving apparatus provided with the planetary clutch mechanism become large.
(ii) A film cartridge in which a spool shaft having film wound thereon may be driven in a direction opposite to a film rewinding direction to thereby feed the film from a film inlet and outlet is disclosed in Japanese Patent Application Laid-open No. 6-123912. In a driving apparatus for the cartridge described in this publication, the spool shaft is rotated in two direction by the utilization of the forward rotation and reverse rotation of a single motor. Herein, the words "forward rotation" and "reverse rotation" are used only to distinguish between the directions of rotation of a drive source such as a motor, and "forward rotation" and "reverse rotation" are not particularly defined from the structure of the drive source and the chief and the sub of the directions of rotation.
   When an openable and closable door is to be provided in the film inlet and outlet of the above-described cartridge in order to prevent the leakage of light into the cartridge, it would occur to mind to discretely provide a drive source (e.g. a motor) exclusively for use for the openable and closable door because the rotations of the motor in forward and reverse directions are utilized for the driving of the spool shaft. However, it is very wasteful in mechanism to provide a plurality of drive sources for a single cartridge. Moreover, the spool shaft and the drive shaft of the openable and closable door are proximate to each other and this may lead to a case where it is difficult to secure a space for disposing a plurality of drive sources near them, and there will arise the necessity of providing the respective drive sources separately from the cartridge, which may result in the bulkiness of the mechanism.
(iii) In the prior-art planetary clutch mechanism, when as shown, for example, in Figure 15, the sun gear G1 is rotated in the direction of arrow R1X and the sun gear G1 is reversely rotated (rotated in the direction of arrow R1Y) from a state in which the planetary gear G2 is in meshing engagement with the input gear G3 of the first drive system D1, the planetary lever L starts to move toward the drive system D2 on the opposite side. At this time, the planetary gear G2 is being continuously rotated and therefore, the input gear G3 is rotatively driven until the meshing engagement between the planetary gear G2 and the input gear G3 is completely released. Accordingly, when the stopped position of the object to be driven by the first drive system D1 is restricted to a particular position, if the planetary clutch is changed over after the object to be driven is stopped at the particular position, the stopped position of the object to be driven will deviate.
(iv) As a position detecting mechanism for an object to be driven reciprocally movable between two positions, there is one shown, for example, in Figure 18 of the accompanying drawings. In this mechanism, the fork 100a of a rotatable member 100 is engaged with the end portion 101a of a shaft-like object 101 to be driven, and the rotatable member 100 is reciprocally driven about its shaft 100b within a small angle range less than one full rotation by a drive source, not shown, whereby the object 101 to be driven is reciprocally moved between two stop positions. The rotatable member 100 is provided with an arm 102, and detection switches SW1 and SW2 of which the closing and opening are changed over in conformity with the movement thereof toward and away from the arm 102 are provided at the opposite ends of the range of rotation of the rotatable member 100.

In the above-described mechanism, the circumferential position of the rotatable member 100 being reciprocally rotated is detected and therefore, in which of the two stop positions the object 101 to be driven can be discriminated by only the ON-OFF of one of the detection switches SW1 and SW2, but the stop time when the object 101 to be driven is rotated cannot be detected unless the two switches are present. That is, to discriminate the stop time when the object 101 to be driven is rotated in the direction of arrow Y in Figure 18, it is necessary to bring the arm 102 into contact with the detection switch SW2 immediately before the stop position to thereby reverse the output of the switch. Thus, when the object 101 to be driven is to be rotated in the opposite direction, the output of the detection switch SW2 is again reversed at the rotation starting stage and therefore, after all, it becomes necessary to bring the arm 102 into contact with the other detection switch SW1 immediately before the stop position on the opposite side to thereby reverse the output of the switch.

### SUMMARY OF THE INVENTION

It is an object of the present invention to provide a driving apparatus provided with a stopper capable of restraining a planetary clutch in a predetermined position without using a drive source.

It is another object of the present invention to provide an apparatus capable of driving a spool shaft and an openable and closable door by a compact mechanism.

It is still another object of the present invention to provide a driving apparatus capable of preventing the deviation of the stopped position of an object to be driven when a drive source and a drive system are disconnected from each other by a planetary clutch.

It is yet still another object of the present invention to provide a driving apparatus in which a position detecting mechanism for an object to be driven can be more simplified than in the prior art.

The present invention is applied to a driving apparatus provided with a drive system provided so as to convert the motion of a drive source into the movement of an object to be driven and having an input gear disposed at an input end for the motion from the drive source, a planetary clutch mechanism having a sun gear and a planetary gear, the planetary gear being biased in a direction to mesh with the input gear when the sun gear is rotated in a first direction, the planetary gear being biased in a direction to separate from the input gear when the sun gear is rotated in a second direction opposite to the first direction, and a stopper movable between a first position in which it blocks the movement of the planetary gear separating from the input gear and a second position in which it permits the movement of the planetary gear separating from the input gear, and the driving apparatus is provided with a converting mechanism for converting the motion in the drive system into the motion of the stopper between the first position and the second position.

The present invention is applied to a driving apparatus provided with a drive system provided so as to transmit rotation from a drive source to a spool shaft and having an input gear disposed at the input end of the rotation from the drive source, a planetary clutch mechanism having a sun gear and a planetary gear, the planetary gear being biased in a direction to mesh with the input gear when the sun gear is rotated in a first direction, the planetary gear being biased in a direction to separate from the input gear when the sun gear is rotated in a second direction opposite to the first direction, and a stopper movable between a first position in which it blocks the movement of the planetary gear separating from the input gear and a second position in which it permits the movement of the planetary gear separating from the input gear, and the driving apparatus is provided with a converting mechanism for converting the motion in the drive system into the motion of the stopper between the first position and the second position.

In the present invention, the converting mechanism is provided with a pair of moving bodies combined together so that the circumferential phases thereof may change over in conformity with the direction of motion transmission from the drive source and disposed in the drive system, at least one of the pair of moving bodies is formed with a cam surface for prescribing the position of the stopper, and the cam surface is varied in conformity with the phases of the pair of moving bodies so that the movement of the stopper to the second position may be permitted when the rotation of the sun gear in the first direction is being transmitted to the drive system, and that the stopper may be restrained in the first position when the rotation of the sun gear in the second direction is being transmitted to the drive system.

In the driving apparatus of the present invention, the motion in the drive system is converted into the motion of the stopper between the first position and the second position by the converting mechanism, the stopper moved to the first position blocks the movement of the planetary gear separating from the input gear, and the stopper moved to the second position permits the movement of the planetary gear separating from the input gear.

In the driving apparatus of the present invention, the position of the stopper is such that the cam surface varies in conformity with the phase of the moving members provided in the drive system and therewith, the position of the stopper varies. When the rotation of the sun gear in the first direction is transmitted to the drive system through the planetary gear, the movement of the stopper to the second position is permitted, and when the rotation of the sun gear in the second direction is transmitted to the drive system through the planetary gear, the stopper is restrained in the first position.

The present invention is applied to a driving apparatus for a film cartridge provided with a spool shaft for taking up film FL and an openable and closable door for opening and closing an inlet and outlet for the film FL, and the driving apparatus is provided with a single drive source capable of rotating forwardly and reversely, a spool shaft driving mechanism capable of transmitting the rotation of the drive source to the spool shaft so that the spool shaft may be rotated in one direction by the forward rotation of the drive source and the spool shaft may be rotated in a direction opposite to said one direction by the reverse rotation of the drive source, an openable and closable door driving mechanism capable of transmitting the rotation of the drive source to the openable and closable door so that the openable and closable door may be opened and closed by at least one of the forward rotation and reverse rotation of the drive source, and a drive changeover mechanism capable of changing over the connection and disconnection of a rotation transmitting route on the spool shaft driving mechanism side and the connection and disconnection of a rotation transmitting route on the openable and closable driving mechanism so that one of the spool shaft and the openable and closable door may be selectively driven by the drive source.

The present invention is applied to a driving apparatus for a film cartridge provided with a spool shaft for taking up film FL, and an openable and closable door for opening and closing an inlet and outlet for the film FL, and the driving apparatus is provided with a single drive source capable of rotating forwardly and reversely, a spool shaft driving mechanism capable of transmitting the rotation of the drive source to the spool shaft so that the spool shaft may be rotated in one direction by the forward rotation of the drive source and the spool shaft may be rotated in a direction opposite to said one direction by the reverse rotation of the drive source, an openable and closable door driving mechanism capable of converting one of the forward rotation and reverse rotation of the drive source into reciprocal rotational motion and transmitting it to the openable and closable door, and a drive changeover mechanism capable of changing over the connection and disconnection of a rotation transmitting route on the spool shaft driving mechanism side and the connection and disconnection of a rotation transmitting route on the openable and closable door driving mechanism side so that one of the spool shaft and the openable and closable door may be selectively driven by the drive source.

In the present invention, the drive changeover mechanism is provided with a clutch reciprocally driven between a spool shaft driving position for connecting the rotation transmitting route on the spool shaft driving mechanism side and an openable and closable door driving position for connecting the rotation transmitting route on the openable and closable door driving mechanism side by the rotational force of the drive source, and a restraining mechanism capable of restraining the clutch in the spool shaft driving position.

In the present invention, the direction of rotation of the drive source when the spool shaft is rotated in a direction in which the film FL is fed out of the film cartridge and the direction of rotation of the drive source when the openable and closable door is driven to be opened and closed through the openable and closable door driving mechanism coincide with each other.

The present invention is applied to a driving apparatus for a film cartridge provided with a spool shaft for taking up film FL, and an openable and closable door for opening and closing an inlet and outlet for the film FL, and the driving apparatus is provided with a single drive source capable of rotating forwardly and reversely, a spool shaft driving mechanism capable of transmitting the rotation of the drive source to the spool shaft so that the spool shaft may be rotated in a direction to take up the film FL by the forward rotation of the drive source and the spool shaft may be rotated in a direction to feed out the film by the reverse rotation of the drive source, an openable and closable door driving mechanism capable of converting the reverse rotation of the drive source into reciprocal rotational motion and transmitting it to the openable and closable door, a clutch driven to a spool shaft driving position for connecting a rotation transmitting route on the spool shaft driving mechanism side when the drive source rotates forwardly, and driven to an openable and closable door driving position for connecting a rotation transmitting route on the openable and closable door driving mechanism side when the drive source rotates reversely, and a restraining mechanism reversely, and a restraining mechanism for restraining the clutch in a spool shaft driving position when the drive source rotates reversely after the clutch has been changed over from the openable and closable door driving position to the spool shaft driving position by the forward rotation of the drive source, and releasing the restraint of the clutch when the drive source rotates forwardly thereafter.

In the present invention, when the rotation transmitting route on the spool shaft driving mechanism side is connected by the drive changeover mechanism and the rotation transmitting route on the openable and closable door driving mechanism side is disconnected, the spool shaft is rotated in two directions by the forward rotation and reverse rotation of the drive source. When the rotation transmitting route on the spool shaft driving mechanism side is disconnected by the drive changeover mechanism and the rotation transmitting route on the openable and closable door driving mechanism side is connected, the openable and closeable door is driven to be opened and closed by at least one of the forward rotation and reverse rotation of the drive source. Since the spool shaft and the openable and closable door are driven by the single drive source, the mechanism can be made compact.

In the present invention, when the rotation transmitting route on the spool shaft driving mechanism side is connected and the rotation transmitting route on the openable and closable door driving mechanism side is disconnected, by the drive changeover mechanism, the spool shaft is rotated in two directions by the forward rotation and reverse rotation of the drive source. When the rotation transmitting route on the spool shaft driving mechanism side is disconnected and the rotation transmitting route on the openable and closable door driving mechanism side is connected, by the drive changeover mechanism, one of the forward rotation and reverse rotation of the drive source is converted into the reciprocal rotational motion of the openable and closable door and the openable and closable door is driven to be opened and closed. Since the openable and closable door is opened and closed by the rotation of the drive source in one direction, it is not necessary that the rotation of the drive source in the opposite direction be also transmitted to the openable and closable door driving mechanism, and the construction of the drive changeover mechanism can be simplified. The angle of rotation necessary to open and close the openable and closable door is a small angle less than one full rotation and therefore, if a cam, a link, etc. are used, the rotational motion of the drive source in one direction can be easily converted into reciprocal motion necessary to open and close the openable and closable door.

In the present invention, the direction of the rotational force is reversed in conformity with the direction of rotation of the drive source and the clutch reciprocates between the openable and closable door driving position and the spool shaft driving position. If the clutch is restrained in the spool shaft driving position by the restraining mechanism, the spool shaft can be rotatively driven in two directions by the forward rotation and reverse rotation of the drive source.

In the present invention, the clutch is changed over to the openable and closable door driving position by the rotational force of the drive source and the openable and closable door is opened and closed by the rotation thereof. When the drive source is rotated reversely and the clutch is changed over to the spool shaft driving position and the spool shaft is driven without the direction of rotation of the drive source being changed over, the spool shaft rotates in a direction opposite to the direction for feeding out the film FL. Therefore, there is no possibility of the film FL being caught by the film inlet and outlet or being fed out of the film inlet and outlet, and the rotation of the spool shaft can be utilized for other use (for example, the information reading of a data disc). When thereafter, the clutch is restrained by the restraining mechanism and the direction of rotation of the drive source is reversed, the film FL is fed out of the film inlet and outlet. When the spool shaft is rotated in the direction opposite to the direction for feeding out the film FL to thereby rewind the film FL, the clutch is held in the spool shaft driving position by the rotational force of the drive source, and if the drive source is rotated reversely, the clutch is changed over to the openable and closable door driving position by the rotational force of the drive source and therefore, there is no waste in the sequence of the changeover of the direction of rotation.

In the present invention, when the clutch is in the openable and closable door driving position, the reverse rotation of the drive source is converted into reciprocal rotational motion by the openable and closable door driving mechanism and is transmitted to the openable and closable door, whereby the openable and closable door is opened and closed. When the drive source is rotated forwardly, the clutch is changed over to the spool shaft driving position by the rotational force of the drive source. By the forward rotation of the drive source at this time, the spool shaft is rotated in the direction opposite to the direction for feeding out the film FL and therefore, that rotation can be utilized for other use (for example, the information reading of a data disc). When the drive source is rotated reversely, the clutch is restrained in the spool shaft driving position by the restraining mechanism and the spool shaft is rotated in the direction for feeding out the film FL. When thereafter the drive source is rotated forwardly, the direction of rotation of the spool shaft is reversed, whereby the film FL is rewound. At this time, the restraint of the clutch by the restraining mechanism is released and therefore, when the drive source is again rotated reversely after the termination of the rewinding, the clutch is changed over to the openable and closable door driving position by the rotational force of the drive source.

The present invention is applied to a driving apparatus provided with a drive system provided so as to convert the motion of a drive source into the movement of an object to be driven and having an input gear disposed at an input end for the motion from the drive source, and a planetary clutch mechanism having a sun gear and a planetary gear rotatively driven by the drive source, the planetary gear being biased in a direction to mesh with the input gear when the sun gear is rotated in a first direction, the planetary gear being biased in a direction to separate from the input gear when the sun gear is rotated in a second direction opposite to the first direction. The driving apparatus is provided with a disconnecting mechanism for disconnecting a motion transmitting route in the drive system from after the direction of rotation of the sun gear has been changed over to the second direction until the meshing engagement between the planetary gear and the input gear is released.

In the present invention, the disconnecting mechanism has a first rotatable member for receiving the rotation of the planetary gear, and a second rotatable member combined with the first rotatable member in a state in which it is relatively rotatable about the rotary shaft of the first rotatable member within a predetermined range.

In the present invention, one of the first rotatable member and the second rotatable member is formed with a torque transmitting groove extending in the direction of rotation of these rotatable members, and the other of the first rotatable member and the second rotatable member is formed with a protrusion shorter in the direction of rotation than the torque transmitting groove and capable of fitting into the torque transmitting groove.

The present invention is a driving apparatus for a film cartridge in which the stopped position of a spool shaft during the rewinding of film is restricted to a particular position, the driving apparatus being provided with a drive system provided so as to transmit the rotation of a drive source to the spool shaft and having an input gear disposed at an input end for the rotation from the drive source, and a planetary clutch mechanism having a sun gear and a planetary gear rotatively driven by the drive source, the planetary gear being biased in a direction to mesh with the input gear when the sun gear is rotated in a first direction, the planetary gear being biased in a direction to separate from the input gear when the sun gear is rotated in a second direction opposite to the first direction, the drive system being designed such that the spool shaft is rotated in a film rewinding direction when the sun gear is rotated in the first direction, and the driving apparatus is provided with a disconnecting mechanism for disconnecting a motion transmitting route in the drive system from after the direction of rotation of the sun gear has been changed over to the second direction until the meshing engagement between the planetary gear and the input gear is released.

In the present invention, when the sun gear is rotated in the first direction, the planetary gear comes into meshing engagement with the input gear and the rotation is transmitted to the drive system, whereby an object to be driven is driven. When the sun gear is rotated in the second direction to disconnect the drive source and the drive system after the object to be driven has been driven to a predetermined position, the planetary gear separates from the input gear. Until the meshing engagement between the planetary gear and the input gear is completely released, the motion transmitting route in the drive system is disconnected by the disconnecting mechanism, and the object to be driven will not be moved even if the input gear is rotated.

In the present invention, when the sun gear is rotated in the first direction to thereby move the object to be driven to the predetermined position and thereafter, the direction of rotation of the sun gear is changed over to the second direction, a first rotatable member is rotated relative to a second rotatable member, and the second rotatable member becomes stationary.

In the present invention, when the sun gear is rotated in the first direction to thereby transmit the rotation of the planetary gear to the input gear, a protrusion comes into engagement with one end side of a torque transmitting groove in the direction of rotation, whereby the rotation is transmitted from the first rotatable member to the second rotatable member. When the direction of rotation of the sun gear is changed over to the second direction, the first rotatable member is rotated relative to the second rotatable member until the protrusion comes into engagement with the other end side of the torque transmitting groove in the direction of rotation, and the second rotatable member becomes stationary.

In the present invention, when the sun gear is rotated in the first direction, the planetary gear comes into meshing engagement with the input gear, whereby the rotation is transmitted to the drive system and the spool shaft is rotatively driven in a film rewinding direction. When the sun gear is rotated in the second direction to disconnect the drive source and the drive system after the spool shaft has been driven to a predetermined position during the rewinding of film, the planetary gear separates from the input gear. Until the meshing engagement between the planetary gear and the input gear is completely released, the motion transmitting route in the drive system is disconnected by the disconnecting mechanism, and the spool shaft will not be rotated even if the input gear is rotated.

The present invention is applied to a driving apparatus provided with a drive system for transmitting motion from a drive source to an object to be driven and reciprocally driving the object to be driven between a first position and a second position, and a position detecting mechanism for detecting the position of a moving body in the drive system and outputting a discrimination signal indicative of whether the object to be driven is in the first position or in the second position. A rotatable member rotatively driven in one direction by the drive source and a motion converting mechanism for converting the rotation of the rotatable member into reciprocal motion are disposed in the drive system, and design is made such that the position detecting mechanism detects the circumferential position of the rotatable member.

In the present invention, the rotatable member makes one full rotation while the object to be driven makes one reciprocation.

In the present invention, the position detecting mechanism has a cam surface formed on the rotatable member along the direction of rotation thereof, and a detection switch of which the closing and opening change over in conformity with the phase of the cam surface. The cam surface is designed such that the signal of the detection switch is reversed only at two points of time when the object to be driven has reached the first position and has reached the second position while the rotatable member makes one full rotation.

In the present invention, the object to be driven is an openable and closable door for opening and closing the film inlet and outlet of a film cartridge.

In the present invention, the rotatable member is rotated only in one direction for the reciprocation of the object to be driven and therefore, the circumferentially different areas of the rotatable member can be properly used for the detection of respective stopping times when the object to be driven is moved from the first position to the second position and when the object to be driven is moved from the second position to the first position. Therefore, the detection of whether the object to be driven is in the first position or in the second position and the detection of the stopping time when the object to be driven is driven can be effected at a location on the circumference of the rotatable member.

In the present invention, when the object to be driven makes one reciprocation, the rotatable member makes one full rotation and returns to its original position and therefore, two discriminating portions can simply be provided on the circumference of the rotatable member so that the output signal of the position detecting mechanism may change over when the object to be driven has reached the first position and when it has reaches the second position.

In the present invention, when the object to be driven reaches the first position, the signal of the detection switch is reversed, and when the object to be driven reaches the second position, the signal of the detection switch is again reversed and therefore, the stopping time when the object to be driven is driven can be judged from the reversal time of the signal of the detection switch. Also, whether the object to be driven is in the first position or in the second position can be discriminated by the ON-OFF of the detection switch.

In the present invention, circumferentially different areas of the rotatable member can be properly used for the detection of respective stopping times when the openable and closable door is closed and when the door is opened. Therefore, the detection of whether the openable and closable door is closed or opened and the detection of the stopping time when the openable and closable door is driven can be effected at a location on the circumference of the rotatable member.

### BRIEF DESCRIPTION OF THE DRAWINGS

Figure 1 is an exploded perspective view of a driving apparatus according to an embodiment of the present invention.

Figure 2 is a plan view of the driving apparatus of Figure 1 as it is assembled.

Figure 3 is a perspective view of a cartridge used in the apparatus of Figure 1.

Figure 4 is a plan view showing the details of a cam provided in the apparatus of Figure 1 to detect the opening or closing of a light intercepting door.

Figure 5 is a block diagram of the control system of a camera in which driving apparatus of Figure 1 is incorporated.

Figure 6 is comprised of Figures 6A and 6B showing a flow chart illustrating those portions of various kinds of control executed by the control system of Figure 5 which are concerned in the control of a motor.

Figure 7 is a plan view showing the state of the apparatus when the light interception door is opened.

Figure 8 is a plan view showing the state of the apparatus when a clutch has been changed over to a spool shaft driving portion side when the light intercepting door has been opened.

Figure 9 shows the state of the apparatus when the direction of rotation of the motor has been reversed from the state of Figure 8.

Figure 10 shows the state of the apparatus when film is fed out of the cartridge.

Figure 11 shows the state of the apparatus during the rewinding of the film.

Figure 12 shows the state of the apparatus when the clutch is changed over from the state of Figure 11 to a light intercepting door driving portion side.

Figure 13 shows the state of the apparatus when the light intercepting door is closed.

Figure 14 is a plan view showing a modification of the embodiment of Figure 1.

Figure 15 schematically shows a planetary clutch mechanism.

Figure 16 is a plan view showing a state in which the direction of rotation of the motor when the light intercepting door is opened and closed and the direction of rotation of the motor when the film is rewound are made coincident with each other.

Figure 17 shows a modification of a switch mechanism for detecting the opening and closing of the light intercepting door.

Figure 18 shows a position detecting mechanism according to the prior art.

### DESCRIPTION OF THE PREFERRED EMBODIMENTS

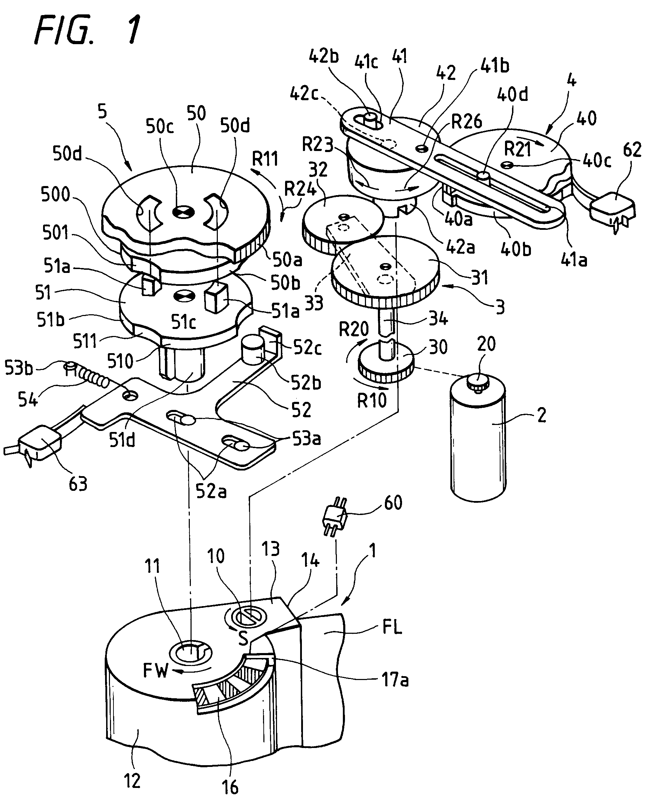

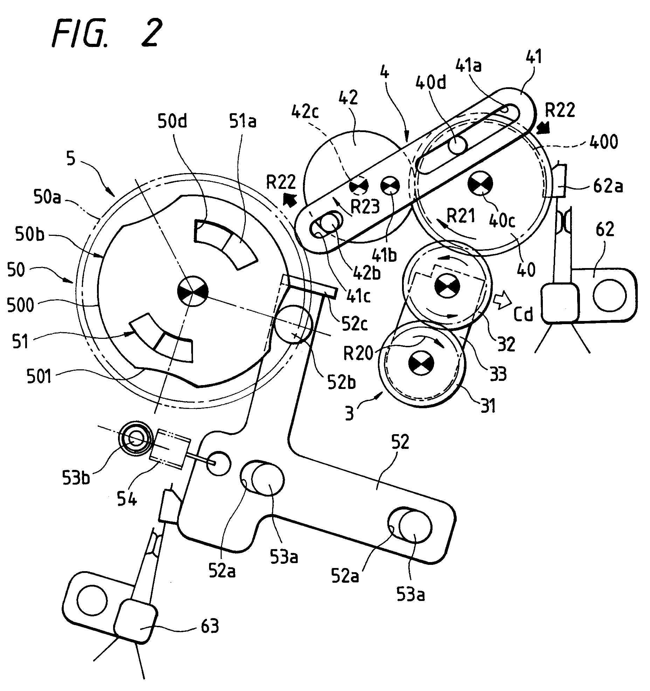

An embodiment in which the present invention is applied to a cartridge driving apparatus in a camera will hereinafter be described with reference to Figures 1 to 13. Figure 1 is an exploded perspective view schematically showing the construction of a driving apparatus according to the present embodiment, and Figure 2 is a plan view showing the assembled state thereof. In these figures, the reference numeral 1 designates a film cartridge (hereinafter simply referred to as the cartridge), the reference numeral 2 denotes a motor capable of rotating forwardly and reversely, the reference numeral 3 designates a clutch unit of the planetary gear type for changing over the transmission route of the rotation of the motor 2, the reference numeral 4 denotes a light intercepting door driving unit for transmitting the rotation of the motor 2 to the light intercepting door driving shaft 10 of the cartridge 1, and the reference numeral 5 designates a spool shaft driving unit for transmitting the rotation of the motor 2 to the spool shaft 11 of the cartridge 1.

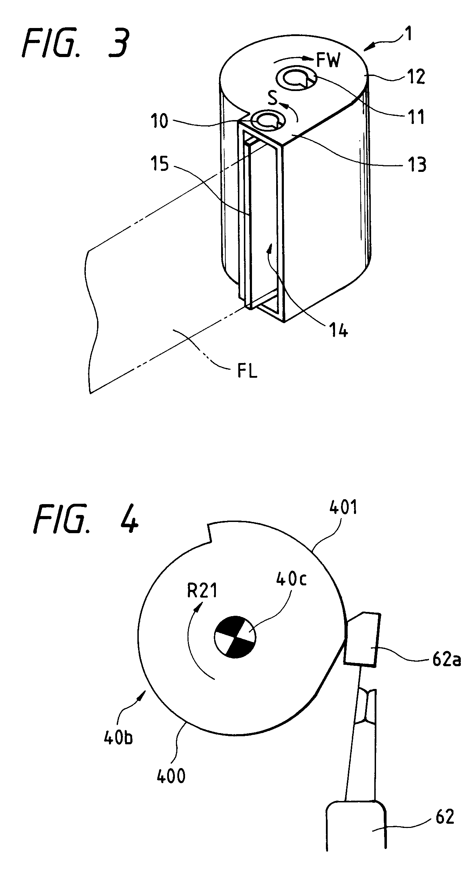

As shown also in Figure 3, the cartridge 1 has a cylindrical containing portion 12 containing therein film FL taken up on the spool shaft 11, and a guide portion 13 protruding straight from the outer periphery of the containing portion 12. An inlet and outlet 14 for the film FL and a light intercepting door 15 for opening and closing the inlet and outlet 14 are provided at the fore end of the guide portion 13. When the light intercepting door driving shaft 10 is rotated in the direction of arrow S in Figure 3, the light intercepting door 15 is driven in a closing direction. In a state in which the light intercepting door 15 is closed, the leakage of light into the cartridge 1 is prevented. The angle of rotation of the light intercepting door driving shaft 10 necessary to open and close the light intercepting door 15 is set to a small angle less than one full rotation. When the light intercepting door 15 is opened and the spool shaft 11 is driven in the direction of arrow FW in Figure 3, the film FL is fed out of the inlet and outlet 14 for the film. A data disc 16 rotatable with the spool shaft 11 is provided on the end surface side of the cartridge 1. When the spool shaft 11 is driven, the information of the data disc 16 is read by a photoreflector 60 through an opening 17a in the cartridge 1, whereby the spool shaft 11 can be stopped at a predetermined stop position. In Figure 3, the opening 17a is omitted.

In Figure 1, three gears, i.e., an input gear 30, a sun gear 31 and a planetary gear 32, and a planetary lever 33 are provided in the clutch unit 3. The pinion gear 20 of the motor 2 and the input gear 30 are connected together through a reduction gear train, not shown, and the input gear 30 and the sun gear 31 are connected together for rotation as a unit through a shaft 34. The sun gear 31 and the planetary gear 32 are supported by the planetary lever 33 and are normally in meshing engagement with each other. The planetary lever 33 is rotatable relative also to the shaft 34. A moderate vertical drag is imparted to the surface of contact between at least one of the sun gear 31 and the planetary gear 32 and the planetary lever 33 by a resilient member (for example, a spring), not shown. By a frictional force to this vertical drag, the planetary lever 33 is biased in the same direction as the direction of rotation of the sun gear 32 and reciprocally moves between the light intercepting door driving unit 4 and the spool shaft driving unit 5.

A one-full-rotation gear 40, a pivotable lever 41 and a door driving plate 42 are provided in the light intercepting door driving unit 4. A toothed surface 40a meshing with the planetary gear 32 and a cam surface 40b for closing and opening a door switch 62 are provided vertically in series on the outer periphery of the one-full-rotation gear 40. A fork portion 42a engageable with the end portion of the light intercepting door driving shaft 10 is formed on the lower end of the door driving plate 42. When the planetary gear 32 and the toothed surface 40a come into meshing engagement with each other and the one-full-rotation gear 40 makes one full rotation in the direction of arrow R21 about the shaft 40c thereof, a pin 40d on the upper surface thereof makes one full rotation while reciprocally moving in a slot 41a in the pivotable lever 41 and the pivotable lever 41 makes one reciprocal pivotal movement about the shaft 41b thereof, and that movement is transmitted to the door driving plate 42 through a slot 41c and a pin 42b, whereby the door driving plate 42 is reciprocally rotated about a shaft 42c by an amount corresponding to the angle of opening and closing. Thereby the light intercepting door 15 is opened and closed. As shown in Figure 4, the cam surface 40b is provided with a small-diametered portion 400 and a large-diametered portion 401 centering around the shaft 40c. The shape of the cam surface 40b is set so that when the light intercepting door 15 is completely opened, a contact 62a may ride onto the large-diametered portion 401, and that when the light intercepting door 15 is completely closed, the contact 62a may drop onto the small-diametered portion 400. The door switch 62 is closed when the contact 62a thereof rides onto the large-diametered portion 401, and is opened when the contact 62a drops onto the small-diametered portion 400.

As shown in Figures 1 and 2, a spool gear 50, a spool driving plate 51 and a stopper lever 52 are provided in the spool shaft driving unit 5. A toothed surface 50a meshing with the planetary gear 32 and a cam surface 50b for displacing the stopper lever 52 are provided vertically in series on the outer periphery of the spool gear 50. The cam surface 50b is provided with a cylindrical portion 500 centering around the shaft 50c of the spool gear 50, and three recesses 501 depressed toward the shaft 50c side. In the inner periphery of the spool gear 50, a pair of torque transmitting grooves 50d arcuately curved about the shaft 50c are formed axially through the spool gear 50.

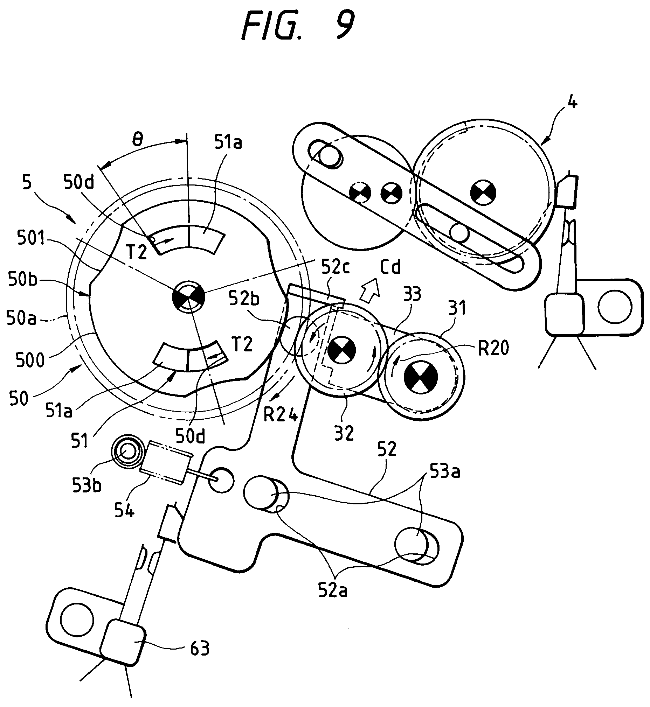

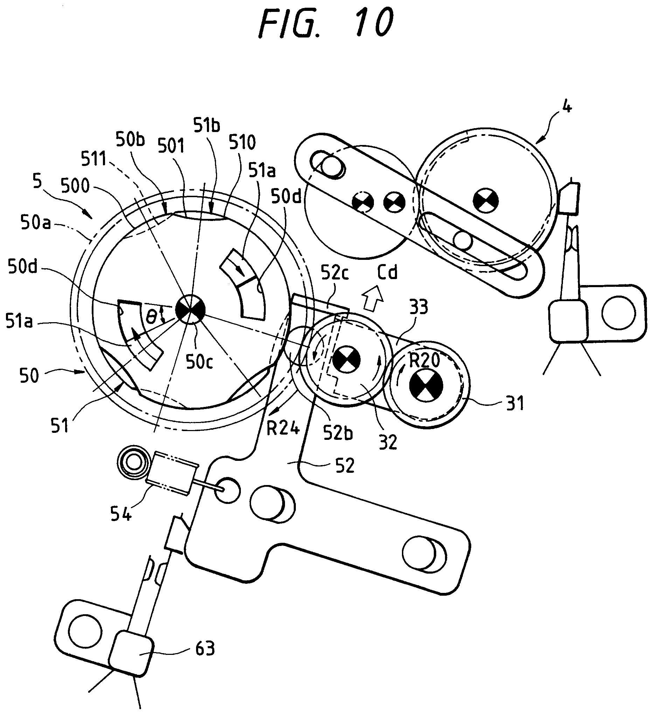

The spool driving plate 51 is formed with a pair of protrusions 51a fitting to the torque transmitting grooves 50d. As is apparent from Figure 2, the protrusions 51a are made circumferentially shorter than the torque transmitting grooves 50d in order to permit a predetermined angle (the angle θ in Figures 9 and 10) of relative rotation of the spool gear 50 and the spool driving plate 51. A cam surface 51b is formed also on the outer periphery of the spool driving plate 51. The cam surface 51b is provided with a cylindrical portion 510 centering around the shaft 51c of the spool driving plate 51, and three recesses 511 depressed toward the shaft 51c side. The cylindrical portion 500 and the cylindrical portion 510 are of the same dimensions, and the recesses 501 and the recesses 511 are of the same dimensions. Also, the disposition of the recesses 501 relative to the cylindrical portions 500 and the disposition of the recesses 511 relative to the cylindrical portions 510 are made coincident with each other. A fork portion 51d engageable with the end portion of the spool shaft 11 of the cartridge 1 is formed on the lower end of the spool driving plate 51.

The stopper lever 52 is made movable in the lengthwise direction of a pair of slots 52a with pins 53a fitted in the slots 52a. A tension spring 54 is provided between the stop lever 52 and a pin 53b. The stopper lever 52 is pulled in the lengthwise direction of the slots 52a by the tensile force of the tension spring 54 and the pin 52b thereof bears against the cam surfaces 50b and 51b, and the stopper lever 52 is reciprocally moved in conformity with the phases of the cam surfaces 50b and 51b. The locations of the recesses 511 and the stop position of the spool shaft 11 are related to one another so that one of the three recesses 511 may come into pressure contact with the pin 52b of the stop lever 52 when the spool shaft 11 has stopped at the above-mentioned predetermined stop position.

A restraining portion 52c engageable with the planetary lever 33 is provided ahead of the pin 52b of the stopper lever 52. When as shown in Figure 9, the pin 52b rides onto at least one of the cylindrical portions 500 and 501 of the cam surfaces 50b and 51b, the planetary lever 33 and the restraining portion 52c come into engagement with each other and the movement of the planetary lever 33 toward the light intercepting door driving unit 4 becomes impossible. At this time, a stopper switch 63 becomes opened. When the pin 52b drops into the recesses 501 and 511, the stopper lever 52 is pulled in by the tension spring 54 and the stopper switch 63 becomes closed. The pins 53a and 53b are secured to a fixed member in the camera, for example, a frame constituting the camera body.

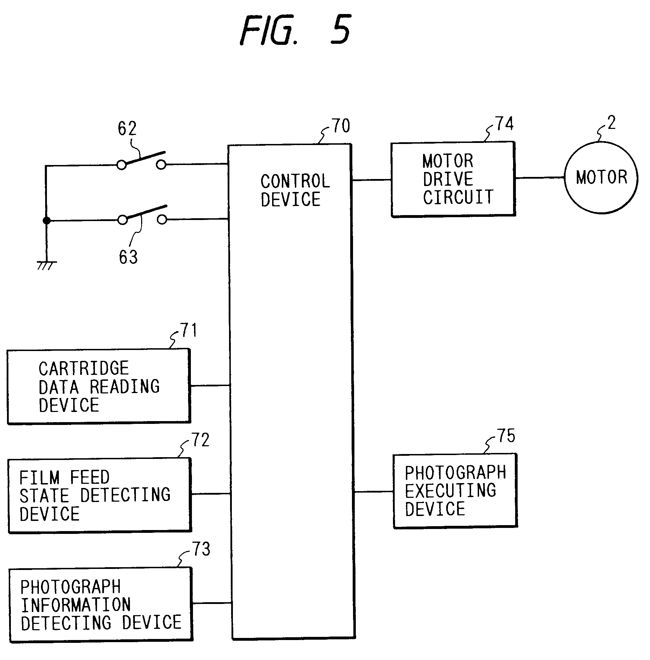

Figure 5 diagrammatically shows a control system for controlling the operation of the above-described motor 2. Portions which are little related to the essential portions of the present embodiment are not shown. In Figure 5, the reference numeral 70 designates a control device which effects various kinds of calculation and control necessary for the photographing operation. The control device 70 is provided with a microcomputer and surrounding instruments necessary for the operation thereof. The above-described door switch 62 and the stopper switch 63 are connected to the control device 70 and also, a cartridge data reading device 71, a film feed state detecting device 72, a photograph information detecting device 73, a motor drive circuit 74 and a photograph executing device 75 are connected to the control device 70.

The cartridge data reading device 71 outputs cartridge information corresponding to the result read by the above-described photoreflector 60. The film feed state detecting device 72 detects the feed state of the film and outputs information corresponding to the result of the detection. The information outputted from this includes information necessary to specify the amount of feed of the film FL from the cartridge 1. The photograph information detecting device 73 detects various kinds of information necessary for photographing, such as object brightness and object distance. The motor drive circuit 74 drives the motor 2 in accordance with a control signal from the control device 70. The photograph executing device 75 operates various instruments (for example, a shutter and a stop) necessary for film exposure in accordance with a control signal from the control device 70 to thereby execute the photographing operation.

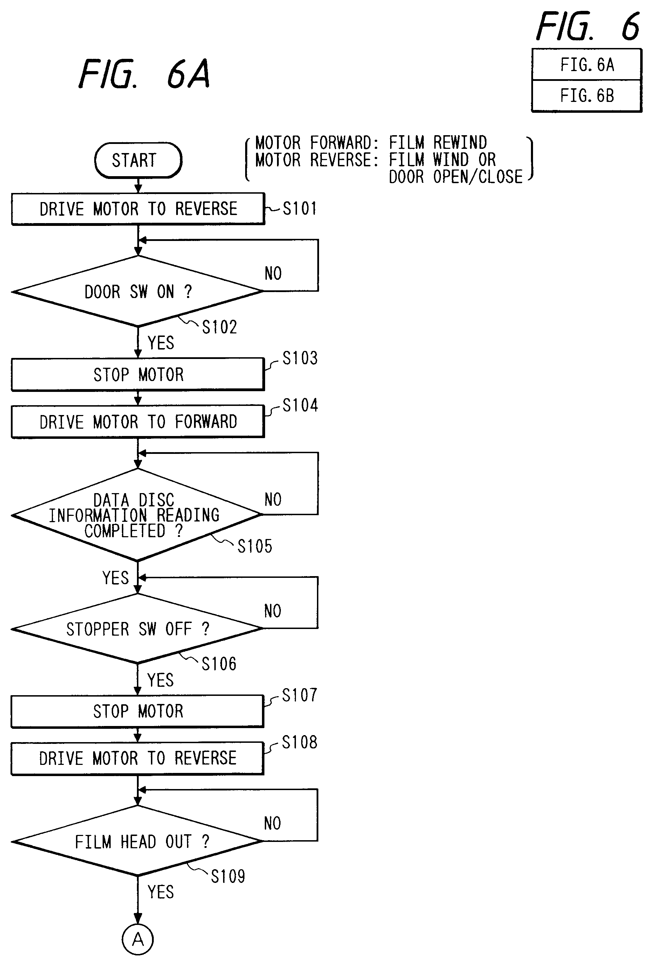

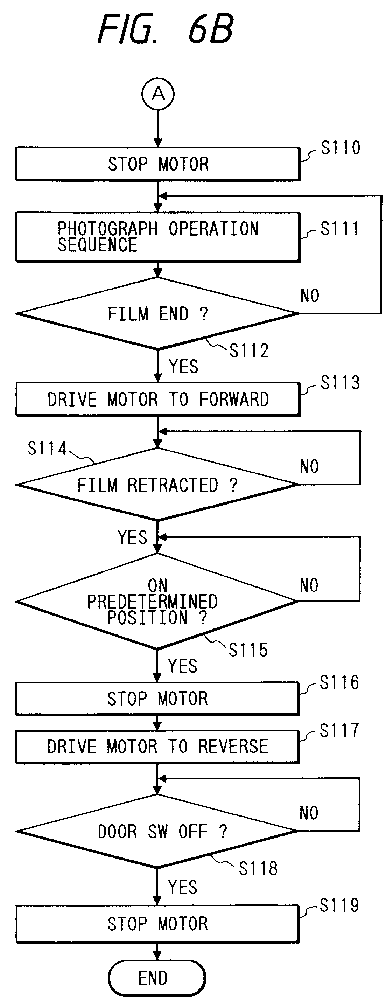

Figures 6A and 6B show those portions of a control sequence executed by the control device 70 from after the cartridge 1 is mounted until photographing is terminated and the film is rewound which are particularly concerned in the control of the rotation of the motor 2. The control procedures of Figures 6A and 6B and the operations of the mechanisms corresponding to the respective procedures will hereinafter be described. In the following, it is assumed that the input gear 30 of the clutch unit 3 is rotated in the direction of arrow R10 in Figure 1 when the motor 2 rotates forwardly and that the input gear 30 is rotated in the direction of arrow R20 in Figure 1 when the motor 2 rotates reversely.

The clutch unit 3, the light intercepting door driving unit 4 and the spool shaft driving unit 5 when the cartridge 1 is mounted are in their initial states shown in Figure 2. When the cartridge 1 is mounted, the process of Figures 6A and 6B is started and first, at a step S101, the motor 2 is driven reversely. At this time, as shown in Figure 2, the input gear 30 and the sun gear 31 are rotated in the direction of arrow R20 and the planetary lever 33 is rotated toward the light intercepting door driving unit 4 as indicated by arrow Cd, and the planetary gear 32 comes into meshing engagement with the one-full-rotation gear 40. Therefore, the one-full-rotation gear 40 is rotated in the direction of arrow R21 in Figure 2, and the pivotable lever 41 is rotated in the direction of arrow R22 in Figure 2 and the door driving plate 42 is rotated in the direction of arrow R23. Thereby, the light intercepting door driving shaft 10 engaged with the door driving plate 42 is driven in a direction opposite to the direction of arrow S in Figure 1 and the light intercepting door 15 (Figure 3) is driven in an opening direction.

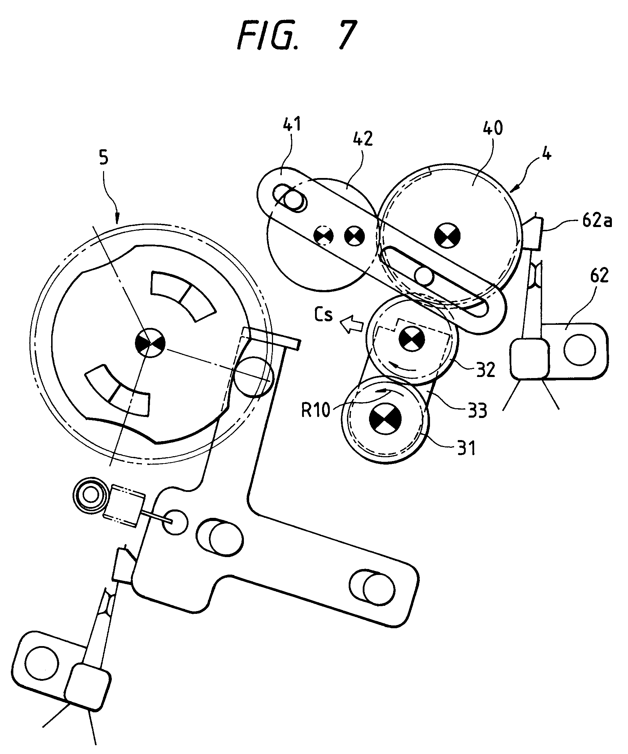

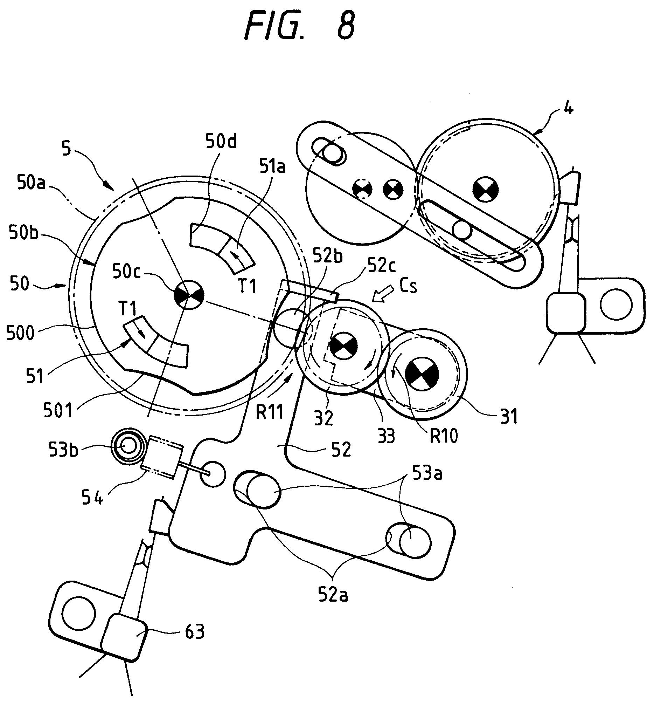

By the above-described shape of the cam surface 40b, the small-diametered portion 400 of the cam surface 40b of the one-full-rotation gear 40 and the contact 62a of the door switch 62 bear against each other in the initial state of Figure 2 and the door switch 62 is OFF, and when the light intercepting door 15 is completely opened, the door switch 62 becomes ON. Therefore, the control device 70 proceeds to a step S102 after the reverse rotation of the motor 2 is started, and judges whether the door switch 62 has become ON. The control device 70 repeats the judgment until the door switch 62 becomes ON, and when the door switch 62 becomes ON, the control device 70 proceeds to a step S103, where the motor 2 is stopped. The state at this time is shown in Figure 7. At the next step S104, the motor 2 is rotated forwardly. At this time, the input gear 30 and the sun gear 31 are rotated in the direction of arrow 10 in Figure 7, and the planetary lever 33 is rotated toward the spool shaft driving unit 5 as indicated by arrow Cs and as shown in Figure 8, the planetary gear 32 comes into meshing engagement with the spool gear 50. Thereby, the spool gear 50 is rotated in the direction of arrow R11 in Figure 8, and the torque transmitting groove 50d and the protrusion 51a come into engagement with each other in the circumferential direction, whereby a drive torque T1 is transmitted to the spool driving plate 51. As a result, the spool driving plate 51 is rotated with the spool gear 50.

The rotation of the spool driving plate 51 in the direction of arrow R11 causes the rotation of the spool shaft 11 and the data disc 16 in a direction opposite to the direction of arrow FW in Figure 1. At this time, the reading of the information of the data disc 16 is effected, and at a step S105, the control device 70 judges whether the reading of the data has been completed. The reading of the data is effected with the spool shaft 11 rotated in a direction opposite to the direction (the direction of arrow FW) in which the film FL is fed out of the cartridge 1 and therefore, there is no possibility of the leading end portion of the film FL being caught by the guide portion 13 and injured thereby during the reading of the data. Also, the film FL remains contained in the cartridge 1 irrespective of the amount of rotation of the data disc 16 and therefore, the amount of rotation necessary for the reading of the data can be set arbitrarily.

When the reading of the data is completed, the control device 70 proceeds to a step S106, where it judges whether the stopper switch 63 is OFF, and at a point of time where at the stopper switch 63 has become OFF, the control device 70 proceeds to a step S107, where it stops the motor 2. At this time, as shown in Figure 9, the pin 52b of the stopper lever 52 rides onto the cylindrical portions 500 and 510 of the cam surfaces 50b and 51b and the restraining portion 52c comes into engagement with the planetary lever 33. At the next step S108, the motor 2 is driven reversely. Thereby the sun gear 31 is rotated in the direction of arrow R20 and the planetary lever 33 is biased in the direction of arrow Cd, but the rotation of the planetary lever 33 is prevented by the restraining portion 52c and she planetary gear 32 remains in meshing engagement with the spool gear 50. Accordingly, the spool gear 50 is rotated in the direction of arrow R24, and when the angle of rotation thereof reaches the play angle θ of the protrusion 51a relative to the torque transmitting groove 50d, a torque T2 is transmitted from the spool gear 50 to the spool driving plate 51, which thus begins to be rotated in the same direction.

At this time, as shown in Figure 10, the phases of the spool gear 50 and the spool driving plate 51 deviate by an angle θ from each other and the recesses 501 of the cam surface 50b and the cylindrical portion 510 of the cam surface 51b, and the cylindrical portion 500 of the cam surface 50b and the recesses 511 of the cam surface 51b overlap each other in the direction of the shaft 50c. Accordingly, the pin 52b of the stopper lever 52 always rides onto one of the cylindrical portions 500 and 510 and the restraining portion 52c and the planetary lever 33 are always engaged with each other. Therefore, a rotation transmitting route from the planetary gear 32 to the spool gear 50 is always connected, whereby the spool shaft 11 is rotatively driven in the direction of arrow FW in Figure 1 and the film FL is fed out of the film inlet and outlet 14.

After the start of the feeding of the film, the control device 70 proceeds to a step S109, where the control device 70 discriminates on the basis of the output signal of the film feed state detecting device 72 whether the film has been fed out by a predetermined amount and film head-out has been completed. When the film head-out is completed, the control device 70 proceeds to a step S110, where it stops the motor 2. Thereafter, the control device 70 proceeds to a step S111, where it executes a predetermined photographing operation sequence by the photograph information detecting device 73 and the photograph executing device 75. At the next step S112, the control device 70 judges on the basis of the output signal of the film feed state detecting device 72 whether the exposure of all frames of the film FL has been completed, and the process of the step S111 is repeated until the exposure of all frames is completed. Each time the exposure of a frame of the film FL is completed, the motor 2 is driven reversely by a predetermined amount and the film FL is wound by an amount corresponding to one frame. Again at this time, the planetary lever 33 and the restraining portion 52c come into engagement with each other and the movement of the planetary lever 33 toward the light intercepting door driving unit 4 is prevented.

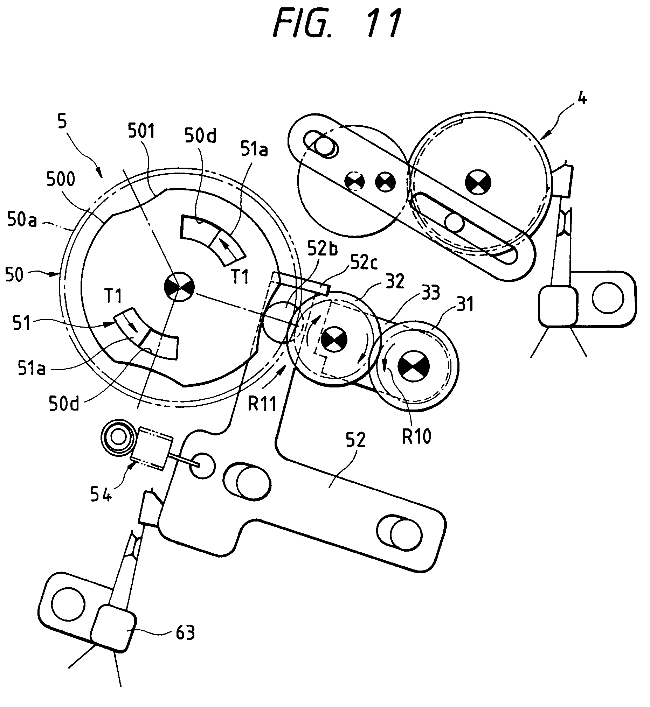

When the exposure of all frames of the film FL is completed, the control device 70 proceeds to a step S113, where it rotates the motor 2 forwardly. At this time, as shown in Figure 11, the sun gear 31 is rotated in the direction of arrow R10 and the spool gear 50 is rotated in the direction of arrow R11. When the spool gear 50 starts its rotation in the direction of arrow R11 in Figure 11 from the position of Figure 10 and there after the angle of rotation thereof reaches the above-mentioned play angle θ, the torque transmitting grooves 50d and the protrusions 51d are circumferentially engaged with each other as shown in Figure 11 and a torque T1 is transmitted from the spool gear 50 is transmitted from the spool gear 50 to the spool driving plate 51, which thus begins to be rotated in the same direction. Thereby the spool shaft 11 is rotated in a direction opposite to the direction of arrow FW in Figure 1 and the film FL is rewound into the cartridge 1.

At the next step S114, the control device 70 judges on the basis of the output signal of the film feed state detecting device 72 whether the film FL has been completely retracted into the cartridge 1, and if so, the control device 70 proceeds to a step S115, and if not so, the control device 70 repeats the judgement. At the step S115, the control device 70 judges on the basis of the output signal of the cartridge data reading device 71 whether the spool shaft 11 has arrived at a predetermined stop position. If the spool shaft 11 has arrived at the predetermined stop position, the control device 70 proceeds to a step S116, where it stops the motor 2, and if the spool shaft 11 has not yet arrived at the predetermined stop position, the control device 70 repeats the judgement. When the spool shaft 11 has stopped at the above-mentioned stop position, the pin 52b of the stopper lever 52 drops into the recesses 501 and 511.

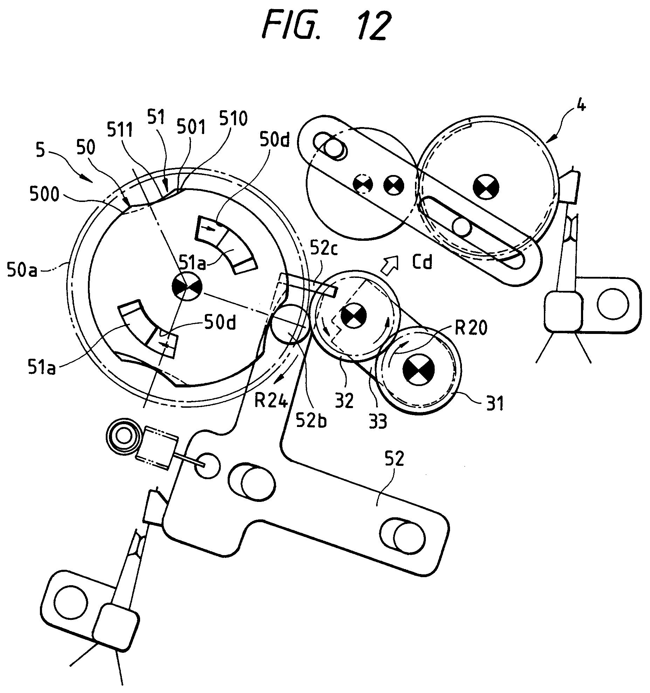

At the next step S117, the motor 2 is driven reversely. At this time, as shown in Figure 12, the restraining portion 52c of the stop lever 52 and the planetary lever 33 are separate from each other and therefore, the planetary lever 33 moves toward the light intercepting door driving unit 4 as indicated by arrow Cd. Until the planetary gear 32 completely separates from the spool gear 50, the spool gear 50 is also rotated in the direction of arrow R24 in Figure 12, and when this rotation is transmitted to the spool shaft 11, the spool shaft 11 is moved to a position differing from the stop position calculated at the step S115. In the present embodiment, however, the play angle θ between the torque transmitting groove 50d of the spool gear 50 and the protrusion 51a of the spool driving plate 51 is set to an angle greater than the angle of rotation of the spool gear 50 until the planetary gear 32 separates and therefore, the rotation is not transmitted from the spool gear 50 to the spool driving plate 51.

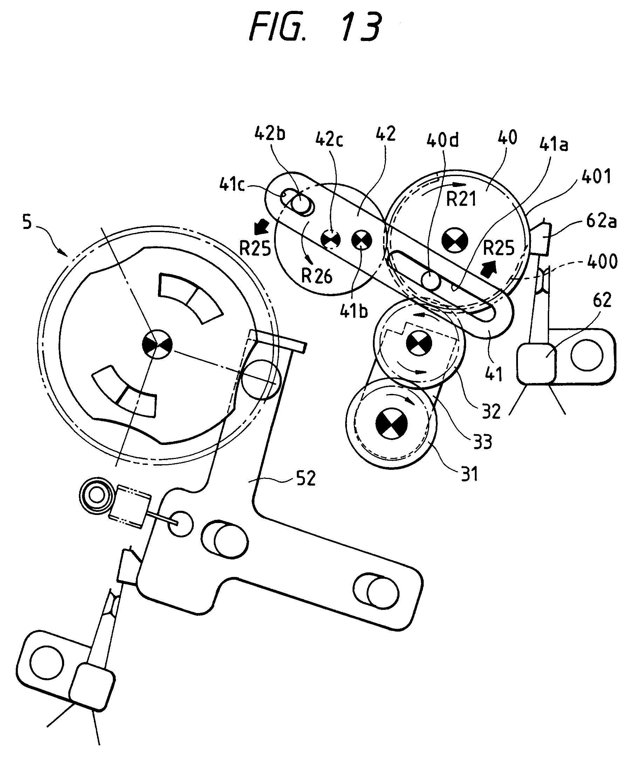

When as shown in Figure 13, the planetary lever 33 is moved toward the light intercepting door driving unit 4 and the planetary gear 32 comes into meshing engagement with the one-full-rotation gear 40, the one-full-rotation gear is rotated in the direction of arrow R21 and the pivotable lever 41 is rotated in the direction of arrow R25, whereby the door driving plate 42 is rotated in the direction of arrow R26. Thereby the light intercepting door driving shaft 10 engaged with the door driving plate 42 is rotatively driven in the direction of arrow S in Figure 1, and the light intercepting door 15 is driven in a closing direction. When the light intercepting door 15 is completely closed, the contact 62a of the door switch 62 drops from the large-diametered portion 401 into the full small-diametered portion 400 and the door switch 62 becomes OFF. After the start of the reverse rotation of the motor 2, at a step S118, the control device 70 judges whether the door switch 62 becomes OFF. At a point of time where at the door switch 62 has becomes OFF, the control device 70 regards the light intercepting door 15 as having been closed and proceeds to a step S119, where it stops the motor 2. Thus, the process ends and at this time, the units 3, 4 and 5 return to their initial states of Figure 2.

As described above, in the present embodiment, the cam surfaces 50b and 51b vary in conformity with the phases of the spool gear 50 and spool driving plate 51 provided in the spool shaft driving unit 5, and along therewith, the position of the stop lever 52 varies and therefore, a drive source such as a motor is not required for the movement of the stopper lever 52 and thus, the driving apparatus can be made compact.

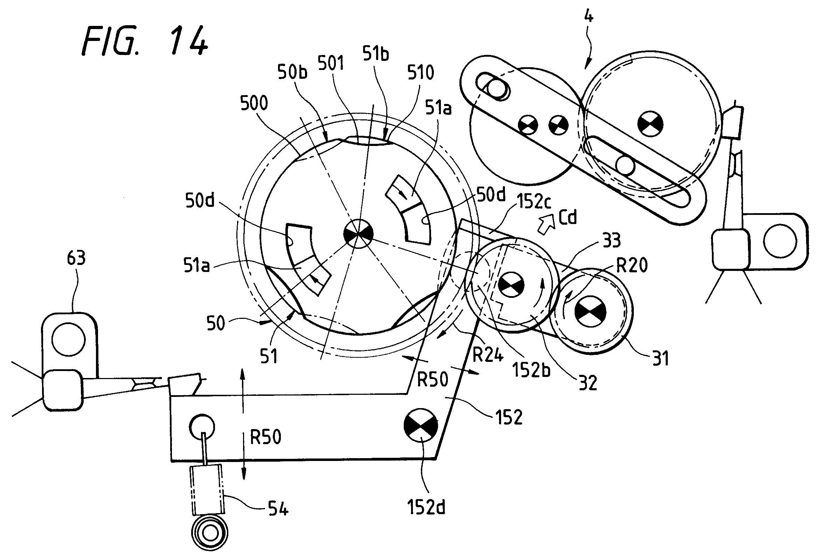

Figure 14 is a plan view showing a modification of the above-described embodiment of the present invention, and corresponds to Figure 10. In Figure 14, the same portions as those in Figure 10 are given the same reference numerals. A stopper lever 152 is rotatable about a shaft 152d. The stopper lever 152 is biased in the direction of arrow R50 by the tensile force of the tension spring 54, and a pin 152b is brought into pressure contact with the cam surfaces 50b and 51b. Therefore, in conformity with the phases of the cam surfaces 50b and 51b, the stopper lever 152 pivotably moves with the shaft 152d as a fulcrum. In a state as shown in Figure 14 wherein the phases of the spool gear 50 and the spool driving plate 51 deviate from each other, the pin 152b of the stop lever 152 rides onto one of the cylindrical portions 500 and 510 and a restraining portion 152c always becomes engaged with the planetary lever 33. On the other hand, when the phases of the spool gear 50 and the spool driving plate 51 coincide with each other and the pin 152b drops into recesses 501 and 511, the stopper lever 152 is rotatively moved in the direction of arrow R50 and the restraining portion 152c separates from the planetary lever 33. Again in this modification, an effect similar to that of the aforedescribed embodiment is obtained.

In the correspondence between the above-described embodiment and the present invention, the motor 2 constitutes a drive source, the spool shaft 11 constitutes an object to be driven, the spool shaft driving unit 5 constitutes a drive system, the spool gear 50 constitutes an input gear, the spool gear 50 and spool driving plate 51 together constitute a converting mechanism, the clutch unit 3 constitutes a planetary clutch mechanism, the stopper lever 52 constitutes a stopper, and the spool gear 50 and spool driving plate 51 together constitute a pair of moving bodies. In the converting mechanism of the above-described embodiment, the cam surfaces 50b and 51b are formed on the sides of the spool gear 50 and spool driving plate 51, respectively, so as to vary the position of the stopper lever 52, but alternatively, the cam surfaces may be formed on the end surfaces of the pair of moving bodies so as to vary the position of the stopper lever 52 by the cam surfaces axially varying in conformity with the phases of the moving bodies. The present invention is not restricted to a cartridge driving apparatus in a camera, but can be applied to various driving apparatuses using a planetary clutch mechanism.

As described above, in the present invention, the motion in the drive system is converted into the motion in the first position and the second position of the stopper and is used and therefore, a drive source such as a motor is not required for the movement of the stopper and thus, the driving apparatus provided with the planetary clutch mechanism can be made compact. Particularly in the present invention, the position of the stopper is prescribed by the moving bodies provided in the drive system and therefore, the apparatus can be made more compact.

Further, the direction of rotation of the motor 2 when the light intercepting door 15 is opened and closed and the direction of rotation of the motor 2 when the film FL is fed out of the cartridge 1 coincide with each other and therefore, the sequence of changing over the direction of rotation of the motor 2 is simplified. That is, the clutch unit 3 need be designed such that when the driving for the opening and closing of the light intercepting door 15 and the rewinding of the film are to be effected when in Figure 1, the sun gear 31 is rotated in the direction of arrow R10, the planetary lever 33 is biased toward the one-full-rotation gear 40 by the rotation in the direction of arrow R10 and the planetary lever 33 is biased toward the spool gear 50 by the rotation in the direction of arrow R20, as shown in Figure 16.

In the construction of Figure 16, when considering the procedure of opening the light intercepting door 15 and thereafter effecting data reading from the data disc 16, it is necessary to rotate the sun gear 31 in the direction of arrow R20 at first to thereby change over the clutch unit 3 to the spool gear 50 side, and thereafter reverse the sun gear 31 to the direction of arrow R10 and effect data reading (data reading need be made coincident with the rewinding direction for the reason set forth above). For this purpose, it is necessary to add the stoppage and reversal of the motor 2 between the steps S104 and S105 of Figure 6A. When the sun gear 31 is to be rotated in the direction of arrow R10 to thereby effect the rewinding of the film, it is necessary to prevent the movement of the planetary lever 33 toward the light intercepting door driving unit 4, release the restraint of the planetary lever 33 at a point of time whereat the spool shaft 11 has been stopped at a predetermined position, and change over the clutch unit 3 to the light intercepting door driving unit 4 side. If at this time, the direction of rotation of the sun gear 31 is still the direction of arrow R10, the changeover of the stopper lever 52 utilizing the relative rotation of the spool gear 50 and the spool driving plate 51 when the spool gear 50 is reversed and the prevention of the rotation of the spool driving plate 51 until the planetary gear 32 separates from the spool gear 50 will both be impossible. To realize these operations, it is necessary that the reversing operation of the spool gear 50 be effected twice extra during the time from the stoppage of the spool shaft 11 at a predetermined position till the changeover of the planetary lever 33.

In the above-described embodiment, the light intercepting door 15 of the cartridge 1 constitutes an openable and closable door, the motor 2 constitutes a drive source, the clutch unit 3, the cam surfaces 50b and 51b of the spool shaft driving unit 5 and the stopper lever 52 together constitute a drive changeover mechanism, the spool shaft driving unit 5 constitutes a spool shaft driving mechanism, the light intercepting door driving unit 4 constitutes an openable and closable door driving mechanism, from the pinion gear 20 of the motor 2 to the fork portion 51d of the spool shaft driving unit 5 via the reduction gear train, not shown, and the clutch unit 3 constitutes a rotation transmitting route on the spool shaft driving mechanism side, from the pinion gear 20 of the motor 2 to the fork portion 41b of the light intercepting door driving unit 4 via the reduction gear train, not shown, and the clutch unit 3 constitutes a rotation transmitting route on the openable and closable door driving mechanism side, the clutch unit 3 constitutes a clutch, and the cam surfaces 50b and 51b of the spool shaft driving unit 5 and the stopper lever 52 together constitute a restraining mechanism. The present invention can be applied not only to cameras, but also to various instruments on which is mountable a film cartridge provided with an openable and closable door for a film inlet and outlet, and film feeding function.

As described above, in the present invention, the spool shaft and openable and closable door of the film cartridge are driven by a single drive source and therefore, it is possible to avoid the mechanism waste of using a plurality of drive sources for a film cartridge and make the cartridge driving apparatus compact near the film cartridge. Particularly, in the present invention, the openable and closable door is opened and closed by the rotation of the drive source in one direction with attention paid to the fact that the angle of rotation of the driving shaft for the openable and closable door is small and therefore, the mechanism can be more simplified. Also, according to the present invention, the clutch is changed over by the utilization of the rotational force of the drive source and therefore, it is unnecessary to prepare a drive source discretely for the changeover of the connection and disconnection of the rotation transmitting route. According to the present invention, it is possible to decrease the frequency of the changeover of the direction of rotation of the drive source in a series of operations from after the film cartridge is mounted and the openable and closable door is opened until the film is rewound into the cartridge and the openable and closable door is closed, to thereby simplify the control procedure.

In the above-described embodiment, the motor 2 constitutes a drive source, the spool shaft driving unit 5 constitutes a drive system, the spool gear 50 constitutes the input gear of the drive system, the spool gear 50 and the spool driving plate 51 together constitute a disconnecting mechanism, the spool gear 50 constitutes a first rotatable member, and the spool driving plate 51 constitutes a second rotatable member. The disconnecting mechanism is not restricted to one comprising the torque transmitting groove 50d and the protrusion 51a as in the embodiment, but permits various modifications such as, for example being designed such that a coil spring is interposed between a pair of rotatable members and the coil spring is charged by the relative rotation of the two rotatable members and the relative rotation is regulated by the spring force so that the two rotatable members may be rotated together when the amount of relative rotation exceeds a predetermined amount. The present invention is not restricted to a cartridge driving apparatus in a camera, but can be applied to various driving apparatuses using a planetary clutch. The disconnecting mechanism is not restricted to between the rotatable members, but may be provided, for example, between a pair of moving members reciprocally movable. The motion of the object to be driven is neither restricted to rotational motion.

As described above, in the present invention, when the direction of rotation of the sun gear is changed over from the first direction to the second direction to disconnect the drive source and the drive system from each other, the motion transmitting route in the drive system is disconnected by the disconnecting mechanism until the meshing engagement between the planetary gear and the input gear of the drive system is completely released and therefore, when the object to be driven is stopped at a predetermined position, there is no possibility of the stop position deviating. Particularly, in the present invention, the disconnecting mechanism can be constituted simply by providing in the drive system a pair of rotatable members rotatable relative to each other within a predetermined range and therefore, it is unnecessary to provide an actuator for changing over the connection and disconnection of the motion transmitting route in the drive system, and provide a brake mechanism for restraining the object to be driven in a predetermined position and thus, the drive system can be constructed simply. In the present embodiment, the relative rotation of the two rotatable members is made possible by the utilization of the torque transmitting groove and protrusion which effect the transmission of rotation from the first rotatable member to the second rotatable member and therefore, the change in the drive system resulting from the addition of the disconnecting mechanism can be minimized. In the present invention, the deviation of the stop position of the spool shaft of the film cartridge during rewinding can be prevented.

In the above-described embodiment, the door switch 62 is closed and opened by the cam surface 40b of the one-full-rotation gear 40 and therefore, when the motor 2 is at a stop, whether the light intercepting door 15 is opened or closed can be discriminated by whether the door switch 62 is closed or opened. Also when the light intercepting door 15 is driven to be opened or closed, the stopping time of the motor 2 can be detected by the reversal of the closing and opening of the door switch 62. Accordingly, the position detecting mechanism can be made simpler than in the prior art which has required two detection switches.

The present invention is not restricted to a case where the circumferential position of the one-full-rotation gear 40 is detected by the detection switch 62. A modification of it is shown in Figure 17. In this modification, a switch brush 43 is attached to the underside of the one-full-rotation gear 40, and a pattern base plate 44 provided with two electrically conductive lands 44a and 44b on the fore end side of the switch brush is provided so as to rest relative to the rotation of the one-full-rotation gear 40. The land 44a is normally in contact with the switch brush 43. Also, when the light intercepting door 15 is fully opened, the switch brush 43 rides onto the land 44b, and when the light intercepting door 15 is fully closed, the switch brush 43 separates from the land 44b. Accordingly, whether the light intercepting door 15 is opened or closed can be discriminated by the presence or absence of the conduction between the lands 44a and 44b, and the stopping time of the light intercepting door 15 can be detected by the changeover of the conductive state between the lands 44a and 44b.

In the above-described embodiment and modification, the light intercepting door 15 of the cartridge 1 constitutes an openable and closable door, the motor 2 constitutes a drive source, from the pinion gear 20 of the motor 2 to the fork portion 42a of the door driving plate 42 constitutes a drive system, the one-full-rotation gear 40 constitutes a rotatable member, the cam surface 40b and the door switch 62 or the brush 43 and the pattern base plate 44 together constitute a position detecting mechanism, and the door switch 62 constitutes a detection switch. The rotatable member is not limited to one which makes one full rotation for one reciprocation of the object to be driven, but may be, for example, one which makes 180° rotation for one reciprocation of the object to be driven. The detection switch may be of the non-contact type such as a proximity switch or an optical sensor.

As described above, in the present invention, the rotatable member which is rotated only in one direction for the reciprocal motion of the object to be driven is provided in the drive system and design is made such that the circumferential position thereof is detected by the position detecting mechanism and therefore, the discrimination of in which of two stop positions the object to be driven is and the discrimination of the stopping time of the object to be driven can be effected, for example, by a single electrical switch and thus, the position detecting mechanism can be more simplified than in the prior art. Particularly, in the present invention, two discriminating portions can simply be provided on the circumference of the rotatable member so that the output signal of the position detecting mechanism may change over when the object to be driven has reached the first position and the second position, respectively, and the position detecting mechanism can be made much simpler. In the present invention, the above-described two kinds of detection can be effected by a single ON-OFF type detection switch and therefore, the number of the parts of the position detecting mechanism can be decreased and the processing of the output signal from the position detecting mechanism can be effected easily. In the present invention, the detection of the opened and closed states of the openable and closable door of the cartridge and the detection of the stopping time during the driving for opening and closing of the door can be effected by a simple construction, and the number of the parts of the cartridge driving apparatus can be decreased to thereby reduce the costs thereof.

## Claims

1. A driving apparatus comprising:
a drive system provided so as to transmit the motion of a drive source to an object to be driven and having an input gear disposed at an input end for inputting the motion from said drive source;
a planetary clutch mechanism having a sun gear and a planetary gear, said planetary gear being adapted to be biased in a direction to mesh with said input gear when said sun gear is rotated in a first direction, said planetary gear being adapted to be biased in a direction to separate from said input gear when said sun gear is rotated in a second direction differing from said first direction;
a stopper movable between a first position in which it prevents said planetary gear from separating from said input gear and a second position in which it permits said planetary gear to separate from said input gear; and
a converting mechanism for converting the motion transmitted by said drive system into the motion of said stopper between said first position and said second position.

2. The driving apparatus of Claim 1, wherein said converting mechanism is provided with a pair of moving bodies combined together so that the circumferential phases thereof may change over in conformity with the direction of transmission of the motion from said drive system and disposed in said drive system, at least one of said pair of moving bodies is formed with a cam surface for prescribing the position of said stopper, and said cam surface is changed in conformity with the phases of said pair of moving bodies so that the movement of said stopper to said second position may be permitted when the rotation of said sun gear in said first direction is being transmitted to said drive system and that said stopper may be restrained in said first position when the rotation of said sun gear in said second direction is being transmitted to said drive system.

3. A driving apparatus comprising:
a drive system provided so as to transmit the motion of a drive source to a spool shaft and having an input gear disposed at an input end for inputting rotational motion from said drive source;
a planetary clutch mechanism having a sun gear and a planetary gear, said planetary gear being adapted to be biased in a direction to mesh with said input gear when said sun gear is rotated in a first direction, said planetary gear being adapted to be biased in a direction to separate from said input gear when said sun gear is rotated in a second direction;
a stopper movable between a first position in which it prevents said planetary gear from separating from said input gear and a second position in which it permits said planetary gear to separate from said input gear; and
a converting mechanism for converting the motion transmitted by said drive system into the motion of said stopper between said first position and said second position.

4. The driving apparatus of Claim 3, wherein said converting mechanism is provided with a pair of moving bodies combined together so that the circumferential phases thereof may change over in conformity with the direction of transmission of the motion from said drive system and disposed in said drive system, at least one of said pair of moving bodies is formed with a cam surface for prescribing the position of said stopper, and said cam surface is changed in conformity with the phases of said pair of moving bodies so that the movement of said stopper to said second position may be permitted when the rotation of said sun gear in said first direction is being transmitted to said drive system and that said stopper may be restrained in said first position when the rotation of said sun gear in said second direction is being transmitted to said drive system.

5. A driving apparatus for a film cartridge provided with a spool shaft for taking up film and an openable and closable door for opening and closing an inlet and outlet for the film, comprising:
a single drive source capable of rotating forwardly and reversely;
a spool shaft driving mechanism for transmitting the rotation of said drive source to said spool shaft so that said spool shaft may be rotated in a forward direction by the forward rotation of said drive source and said spool shaft may be rotated in a reverse direction by the reverse rotation of said drive source;
an openable and closable door driving mechanism capable of transmitting the rotation of said drive source to said openable and closable door so that said openable and closable door may be opened and closed by at least one of the forward rotation and reverse rotation of said drive source; and
a drive changeover mechanism for connecting one of said spool shaft driving mechanism and said openable and closable door driving mechanism to said drive source so as to be capable of transmitting rotation.

6. A driving apparatus for a film cartridge provided with a spool shaft for taking up film and an openable and closable door for opening and closing an inlet and outlet for the film, comprising:
a single drive source capable of rotating forwardly and reversely;
a spool shaft driving mechanism for transmitting the rotation of said drive source to said spool shaft so that said spool shaft may be rotated in a forward direction by the forward rotation of said drive source and said spool shaft may be rotated in a reverse direction by the reverse rotation of said drive source;
an openable and closable door driving mechanism capable of converting one of the forward rotation and reverse rotation of said drive source into reciprocal motion and transmitting it to said openable and closable door; and
a drive changeover mechanism for connecting one of said spool shaft driving mechanism and said openable and closable door driving mechanism to said drive source so as to be capable of transmitting rotation.

7. The driving apparatus of Claim 6, wherein said drive changeover mechanism comprises a clutch comprising a sun gear and a planetary gear and movable, in conformity with the rotation of said drive source, between a first position in which it connects said spool shaft driving mechanism and said drive source together and a second position in which it connects said openable and closable door driving mechanism and said drive source together, and a restraining mechanism for restraining said clutch in said first position.

8. The driving apparatus of Claim 6, wherein the direction of rotation of said drive source when said spool shaft is rotated in a direction in which said film is fed out of said film cartridge and the direction of rotation of said drive source when said openable and closable door is driven to be opened and closed through said openable and closable door driving mechanism are coincident with each other.

9. A driving apparatus for a film cartridge provided with a spool shaft for taking up film and an openable and closable door for opening and closing an inlet and outlet for the film, comprising:
a single drive source capable of rotating forwardly and reversely;
a spool shaft driving mechanism for transmitting the rotation of said drive source to said spool shaft so that said spool shaft may be rotated in a direction to take up the film by the forward rotation of said drive source and said spool shaft may be rotated in a direction to feed out the film by the reverse rotation of said drive source;
an openable and closable door driving mechanism capable of converting the reverse rotation of said drive source into reciprocal motion and transmitting it to said openable and closable door;
a clutch comprising a sun gear and a planetary gear and movable by the rotational force of said drive source between a spool shaft driving position in which it connects said spool shaft driving mechanism and said drive source together when said drive source rotates forwardly and an openable and closable door driving position in which it connects said openable and closable door driving mechanism and said drive source together when said drive source rotates reversely; and
a restraining mechanism for restraining said clutch in said spool shaft driving position when said drive source rotates reversely after by the forward rotation of said drive source, said clutch has been moved from said openable and closable door driving position to said spool shaft driving position, and releasing the restraint of said clutch when said drive source rotates forwardly thereafter.

10. A driving apparatus comprising:
a drive system provided so as to transmit the motion of a drive source to an object to be driven and having an input gear disposed at an input end for inputting the motion from said drive source;
a planetary clutch mechanism having a sun gear and a planetary gear driven by said drive source, said planetary gear being adapted to be biased in a direction to mesh with said input gear when said sun gear is rotated in a first direction, said planetary gear being adapted to be biased in a direction to separate from said input gear when said sun gear is rotated in a second direction differing from said first direction; and
a cutting-off mechanism for cutting off the transmission of motion in said drive system from after the direction of rotation of said sun gear has been changed over to said second direction until the meshing engagement between said planetary gear and said input gear is released.

11. The driving apparatus of Claim 10, wherein said cutting-off mechanism comprises a first rotatable member to which the rotation from said planetary gear is transmitted, and a second rotatable member rotatable relative to said first rotatable member only within a predetermined angle, and the transmission of motion is cut off in said drive system while said first rotatable member and said second rotatable member are rotated relative to each other.

12. The driving apparatus of Claim 11, wherein one of said first rotatable member and said second rotatable member is formed with a torque transmitting groove extending in the direction of rotation thereof, and the other of said first rotatable member and said second rotatable member is formed with a protrusion engaged with said torque transmitting groove and movable within a range limited by said groove.

13. A driving apparatus for a film cartridge in which the stop position of a spool shaft during the rewinding of film is restricted to a particular position, comprising:
a drive system provided so as to transmit the rotational motion of a drive source to a spool shaft and having an input gear disposed at an input end for inputting the rotational motion from said drive source;
a planetary clutch mechanism having a sun gear and a planetary gear, said planetary gear being adapted to be biased in a direction to mesh with said input gear when said sun gear is rotated in a first direction, said planetary gear being adapted to be biased in a direction to separate from said input gear when said sun gear is rotated in a second direction differing from said first direction, said spool shaft being adapted to be rotated in a film rewinding direction when said sun gear is rotated in said first direction; and
a cutting-off mechanism for cutting off the transmission of motion in said drive system from after the direction of rotation of said sun gear has been changed over to said second direction until the meshing engagement between said planetary gear and said input gear is released.

14. A driving apparatus comprising:
a drive system comprising a rotatable member rotatable with the motion of a drive source transmitted thereto, and a motion converting mechanism for converting the rotation of said rotatable member into reciprocal motion and transmitting it to an object to be driven, said object to be driven being adapted to be reciprocally moved between a first position and a second position; and
a position detecting mechanism for detecting the position of said rotatable member and outputting a discrimination signal indicative of whether said object to be driven is in said first position or in said second position;
said position detecting mechanism detecting the circumferential position of said rotatable member.

15. The driving apparatus of Claim 14, wherein said rotatable member makes one full rotation when said object to be driven makes one reciprocation.

16. The driving apparatus of Claim 15, wherein said position detecting mechanism has a cam surface formed on said rotatable member along the direction of rotation thereof, and a detection switch adapted to bear against said cam surface and be closed or opened in conformity with the rotated position of said rotatable member, and said cam surface is formed so that the signal of said detection switch may be inverted when said object to be driven is in said first position and when said object to be driven is in said second position.

17. The driving apparatus of Claim 14, wherein said object to be driven is an openable and closable door for opening and closing the film inlet and outlet of a film cartridge.
